# EUROPEAN PATENT APPLICATION

(11) **EP 4 772 470 A1**
(43) Date of publication of application: **08.07.2026**
(21) Application number: 25855914.5
(22) Date of filing: 23.07.2025
(51) Int. Cl.: C01B 13/18, C01G 53/40, C01G 49/00, H01M 4/505, H01M 4/525, H01M 4/131, H01M 10/0525, H01M 10/054

(54) **METAL OXIDE AND USE THEREOF**

(30) Priority: 21.08.2024 CN 202411154444
(71) Applicant: HUAYOU NEW ENERGY TECHNOLOGY (QUZHOU) CO., LTD., Quzhou, Zhejiang 324000 (CN); ZHEJIANG HUAYOU COBALT CO., LTD., Jiaxing, Zhejiang 314000 (CN)
(72) Inventor: XU, Wei, Quzhou, Zhejiang 324000 (CN); GUO, Xing, Quzhou, Zhejiang 324000 (CN); QIU, Tian, Quzhou, Zhejiang 324000 (CN); HUANG, Zhenhua, Quzhou, Zhejiang 324000 (CN); LIU, Zeping, Quzhou, Zhejiang 324000 (CN); SHEN, Zhenlei, Quzhou, Zhejiang 324000 (CN)
(74) Representative: GLAWE DELFS MOLL
(86) International application number: PCT/CN2025/110187
(87) International publication number: WO 2026/040744

(57) **Abstract**

The present invention relates to a metal oxide and use thereof. The metal oxide has a face-centered cubic structure, the space group is Fd-3m, the lattice constant a of the metal oxide is 8.32 Å to 8.37 Å, and in the metal oxide, the tensile residual stress F₁ is 0.105 MPa to 5.51 MPa, or the compressive residual stress F₂ is 1.05 MPa to 8.6 MPa. The metal oxide is prepared by spray pyrolysis with a pyrolysis rate K ranging from 0.361 to 48.611. The metal oxide of the present invention not only has a higher degree of crystallinity and high stability, but also has a high activity, which is beneficial to improve the intercalation of sodium ions or lithium ions when preparing a cathode material, thereby improving the comprehensive electrical performance.

## Description

### Cross-Reference to Related Invention

The present invention claims priority on the basis of Chinese Patent Invention No. 202411154444.0, filed with the China National Intellectual Property Administration on 21 August 2014 and entitled "Metal oxides and use thereof", which is incorporated herein by reference in its entirety.

### Technical Field

The present invention relates to the field of battery technologies, and in particular, to a metal oxide and use thereof.

### Background

Conventional hydroxide precursors generally belong to the hexagonal system, and are unstable in the air as they are prone to oxidation reactions and are hygroscopic, thereby affecting the thermal stability of the precursors and causing relatively high storage costs, and partial oxidation will cause a reduction in the sodium or lithium coordination, thereby causing a series of problems such as a decrease in capacity and an excessively high residual alkali amount on the surface. Compared with hydroxides belonging to the hexagonal system, although oxides belonging to the cubic system have a high degree of crystallinity and good stability, they have a low activity, which causes difficulty in sodium intercalation when a cathode material is sintered from an oxide belonging to the cubic system, thereby affecting the electrical performance.

### Summary

On this basis, it is necessary to provide a metal oxide and use thereof aiming at the described problem. The metal oxide not only has a higher degree of crystallinity and stability, but also has a high activity, and is beneficial to improve the intercalation of sodium ions or lithium ions when preparing a cathode material, thereby improving the comprehensive electrical performance.

A metal oxide, wherein the metal oxide has a face-centered cubic structure, the space group is Fd-3m, the lattice constant a of the metal oxide is 8.32Â to 8.37Å, and in the metal oxide, the tensile residual stress F₁ is 0.105 MPa to 5.51 MPa, or the compressive residual stress F₂ is 1.05 MPa to 8.6 MPa.

The metal oxide is prepared by spray pyrolysis with a pyrolysis rate K ranging from 0.361 to 48.611.

**In** one of the embodiments, the pyrolysis temperature T = 938.26 - 494.18 × 0.957^{^K}.

**In** one of the embodiments, the unit cell density of the metal oxide ρ = 4.806 + 9 × 10⁻⁴ × T.

**In** one of the embodiments, the unit cell density ρ of the metal oxide is 5.22 g/cm³ to 5.58 g/cm³.

**In** one of the embodiments, the (220) crystal plane diffraction angle in the metal oxide is θ = 30.878 - 0.001T.

**In** one of the embodiments, the (220) crystal plane diffraction angle θ of the metal oxide is 30.10° to 30.42°.

**In** one of the embodiments, the peak intensity ratio of a (311) crystal plane diffraction peak to a (111) crystal plane diffraction peak in the metal oxide is n = 5 × 10⁻⁶ × T² - 0.0032 × T + 2.2835.

**In** one of the embodiments, the peak intensity ratio n of the (311) crystal plane diffraction peak to the (111) crystal plane diffraction peak in the metal oxide is 1.86 to 3.33.

**In** one of the embodiments, the coordinates of oxygen atoms in the metal oxide are (x, y, z), wherein x = y = z = 0.264 - 1 × 10⁻⁵ × T.

**In** one of the embodiments, the coordinates of oxygen atoms in the metal oxide are (x, y, z), wherein x = y = z = 0.2555 to 0.2591.

**In** one of the embodiments, the grain size of the metal oxide is 300 Å to 1000 Å.

A cathode material made from the metal oxide precursor as described above.

A cathode sheet, comprising a cathode current collector and a cathode material layer disposed on a surface of the cathode current collector, wherein the cathode material layer comprises the cathode material described above.

A secondary battery comprising the cathode sheet as described above.

The metal oxide of the present invention is prepared by a spray pyrolysis method with a certain pyrolysis rate, and satisfies a specific lattice constant and residual stress, such that the metal oxide has a small grain size, which is beneficial to increase the number of grain boundaries and introduce more lattice distortion or defects. Therefore, while maintaining a high degree of crystallinity and high stability, the metal oxide can provide additional sodium or lithium intercalation sites, thereby improving the activity of the metal oxide. This, in turn, promotes the intercalation and migration of sodium or lithium ions during the preparation of a cathode material, improving the overall electrical performance. In addition, the metal oxide also achieves an intimate combination of a spray pyrolysis process and a crystal structure, is more convenient for obtaining an oxide precursor having a specific crystal structure, is not susceptible to multiple factors, and is beneficial to save time costs and trial and error costs.

### Brief Description of the Drawings

To describe the technical solutions in the embodiments of the present invention or in the prior art more clearly, the following briefly introduces the accompanying drawings required for describing the embodiments or the prior art. Apparently, the accompanying drawings in the following description show merely some embodiments described in the present invention. For a person of ordinary skill in the art, other drawings may also be obtained according to these drawings without creative efforts.
Fig. 1 is a scanning electron microscope image of a metal oxide prepared in Example 1 of the present invention;
Fig. 2 is an X-ray diffraction pattern of the metal oxide prepared in Example 1 of the present invention;
Fig. 3 is a scanning electron microscope image of a metal oxide prepared in Example 2 of the present invention;
Fig. 4 is an X-ray diffraction pattern of the metal oxide prepared in Example 2 of the present invention;
Fig. 5 is a scanning electron microscope image of a metal oxide prepared in Example 3 of the present invention;
Fig. 6 is an X-ray diffraction pattern of the metal oxide prepared in Example 3 of the present invention;
Fig. 7 is a scanning electron microscope image of a metal oxide prepared in Comparative Example 1 of the present invention;
Fig. 8 is a test graph of the capacity performance of cathode materials prepared from the metal oxides of Example 1 and Comparative Example 1 of the present invention, where A is a capacity performance curve of a cathode material prepared from the metal oxide of Example 1, and B is a capacity performance curve of a cathode material prepared from the metal oxide of Comparative Example 1;
Fig. 9 is a test graph of the cycle performance of cathode materials prepared from the metal oxides of Example 1 and Comparative Example 1 of the present invention, where A is a curve of the cycle performance of a cathode material prepared from the metal oxide of Example 1, and B is a curve of the cycle performance of a cathode material prepared from the metal oxide of Comparative Example 1.

### Detailed Description of the Embodiments

In order to facilitate understanding of the present invention, the present invention will be described in more detail below. However, it should be understood that the present invention may be implemented in many different forms, and is not limited to the embodiments or examples described herein. Rather, these embodiments or examples are provided for a more thorough understanding of the disclosure of the present invention.

Unless defined otherwise, all technical and scientific terms used herein have the same meaning as commonly understood by a person skilled in the art to which the present invention belongs. The terminology used herein in the description of the present invention is for the purpose of describing particular embodiments or examples only and is not intended to be limiting of the present invention.

The present invention provides a metal oxide. The metal oxide has a face-centered cubic structure, the space group is Fd-3m, the lattice constant a of the metal oxide is 8.32Â to 8.37Å, and in the metal oxide, the tensile residual stress F₁ is 0.105 MPa to 5.51 MPa, or the compressive residual stress F₂ is 1.05 MPa to 8.6 MPa.

The metal oxide is prepared by a spray pyrolysis method and has a pyrolysis rate K ranging from 0.361 to 48.611, including but not limited to any value of the following values: 0.361, 0.5, 1, 2, 5, 10, 15, 16, 20, 27, 30, 35, 40, 48.611, or any range therebetween.

It can be understood that, based on the fact that the metal oxide has a face-centered cubic structure, the space group is Fd-3m, and the lattice constant a = b = c, the present invention does not impose any additional limitation on b and c, and the lattice constant includes but is not limited to any value of 8.32Å, 8.324Å, 8.337Å, 8.341Å, 8.354Å, and 8.37Å, or any range therebetween.

The metal oxide of the present invention is prepared by a spray pyrolysis method with a certain pyrolysis rate, and satisfies a specific lattice constant and residual stress, such that the metal oxide has a small grain size, which is beneficial to increase the number of grain boundaries and introduce more lattice distortion or defects. Therefore, while maintaining a high degree of crystallinity and high stability, the metal oxide can provide additional sodium or lithium intercalation sites, thereby improving the activity of the metal oxide. This, in turn, promotes the intercalation and migration of sodium or lithium ions during the preparation of a cathode material, improving the overall electrical performance.

**In** addition, the metal oxide also achieves an intimate combination of a spray pyrolysis process and a crystal structure, is more convenient for obtaining an oxide precursor having a specific crystal structure, is not susceptible to multiple factors, and is beneficial to save time costs and trial and error costs.

**It** should be noted that, in the spray pyrolysis method of the present invention, the ratio of the grain size (Å) to the pyrolysis time (min) is defined as the pyrolysis rate K, which represents the relationship between the grain size and the pyrolysis time, and is unitless.

**In** an embodiment, the grain size of the metal oxide is preferably 300 Å to 1000 Å, and the average grain size of the metal oxide includes, but is not limited to, any value of 300 Å, 438.89 Å, 720.25 Å, 860.28 Å, 957.05 Å, and 1000 Å, or any range therebetween.

**In** an embodiment, the pyrolysis time is preferably 1 min to 20 min.

**In** an embodiment, the pyrolysis temperature T = 938.26 - 494.18 x 0.957^{^K}, more preferably 452°C to 879°C, including but not limited to any value of 452°C, 500°C, 600°C, 645°C, 700°C, 760°C, 800°C, and 879°C, or a range between any two, preferably 500°C to 850°C.

**It** should be noted that the pyrolysis temperature is a set temperature of the system during the preparation process of the spray pyrolysis method, that is, an operating temperature in a spray pyrolysis device.

The direction and magnitude of the residual stress F in the metal oxide are closely related to the pyrolysis temperature T in the pyrolysis rate K, wherein when the pyrolysis temperature T is less than 760°C, the residual stress F in the metal oxide is mainly manifested as a tensile residual stress F₁ which increases with increase of the pyrolysis temperature T; and when the pyrolysis temperature T is greater than or equal to 760°C, the residual stress F in the metal oxide is mainly manifested as a compressive residual stress F₂ which increases with increase of the pyrolysis temperature T.

**In** an embodiment, the residual stress F in the metal oxide and the pyrolysis temperature T preferably satisfies the following relationship:
(1) when 452°C ≤ T < 760°C, F₁ = 0.015T - 5.895, where F₁ is the tensile residual stress, and more preferably, F₁ is 0.885 MPa to 5.510 MPa, F₁ includes, but is not limited to, any value of 0.885 MPa, 1.339 MPa, 4.355 MPa, and 5.510 MPa, or a range value between any two thereof; and
(2) when 760°C ≤ T ≤ 879°C, F₂ = 0.0539T - 39.914, where F₂ is the compressive residual stress, and more preferably, F₂ is 1.05 MPa to 7.46 MPa, and F₂ includes, but is not limited to, any value of 1.05 MPa, 2.311 MPa, 6.038 MPa, and 7.46 MPa or a range value between any two thereof.

It can be understood that the formula regarding the residual stress described in the present invention is merely a quantitative conversion, and does not relate to unit conversion. In an embodiment, the unit cell density ρ of the metal oxide is directly proportional to the pyrolysis temperature T in the pyrolysis rate K, and satisfies ρ = 4.806 + 9 × 10⁻⁴ × T. Based on the specific relationship, it is beneficial to further realize single-factor adjustment of the crystal structure. It can be understood that, in the present invention, the unit cell density ρ (g/cm³) is converted into a unitless value and is then converted with the unitless pyrolysis rate K. In other words, the formula for unit cell density described in the present invention is only a quantitative conversion and does not involve unit conversion.

In an embodiment, the unit cell density ρ of the metal oxide is preferably 5.22 g/cm³ to 5.55 g/cm³, such that the metal oxide has a larger unit cell density, and a higher cathode energy density is more easily obtained. ρ includes, but is not limited to, any value of 5.22 g/cm³, 5.240 g/cm³, 5.421 g/cm³, 5.511 g/cm³, 5.55 g/cm³, and 5.573 g/cm³, or a range value between any two thereof.

In an embodiment, there are six main characteristic diffraction peaks in the X-ray diffraction pattern of the metal oxide, and the corresponding crystal planes are (111), (220), (311), (400), (511), and (440), respectively.

In an embodiment, as the pyrolysis temperature T in the pyrolysis rate K increases, the characteristic diffraction peak corresponding to the (220) crystal plane in the metal oxide shifts to a low angle, and the diffraction angle of the (220) crystal plane in the metal oxide satisfies θ = 30.878 - 0.001T. Based on the specific relationship, it is beneficial to further realize single-factor adjustment of the crystal structure. It can be understood that the present invention converts the crystal plane diffraction angle θ in the unit of ° and the pyrolysis temperature T in the unit of °C into numerical values without a unit for conversion, that is, the formula regarding the crystal plane diffraction angle in the present invention is merely a quantitative conversion, and does not relate to unit conversion. K includes, but is not limited to, any value of 1.83, 15.06, 26.40, 39.89, or a range value between any two thereof.

In an embodiment, the (220) crystal plane diffraction angle θ in the metal oxide is preferably 30.10° to 30.42°, such that the metal oxide has more lattice distortion or defects. While maintaining a high degree of crystallinity and high stability, additional sites of sodium intercalation or lithium intercalation can be provided, thereby improving the activity of the metal oxide, and further promoting the intercalation and migration of sodium ions or lithium ions when preparing a cathode material. θ includes, but is not limited to, any value of 30.10°, 30.025°, 30.095°, 30.195°, 30.396°, 30.42°, or a range value between any two thereof.

In an embodiment, the peak intensity ratio n of a (311) crystal plane diffraction peak to a (111) crystal plane diffraction peak in the metal oxide is n = 5 × 10⁻⁶ T² - 0.0032 × T + 2.2835.

In an embodiment, the peak intensity ratio n of the (311) crystal plane diffraction peak to the (111) crystal plane diffraction peak in the metal oxide is preferably 1.86 to 3.33, and n includes, but is limited to, any value in 1.86, 2.015, 2.432, 2.845, 3.189, and 3.33, or a range value between any two thereof.

In an embodiment, the metal atom coordinates in the metal oxide are not affected by the spray pyrolysis process, while the coordinates of oxygen atoms decrease as the pyrolysis temperature T in the pyrolysis rate K increases. When the coordinates of oxygen atoms are (x, y, z), x = y = z = 0.264 - 1 × 10⁻⁵ × T is satisfied. Based on the specific relationship, it is beneficial to further achieve single-factor adjustment of the crystal structure. **It** can be understood that, in the present invention, the pyrolysis temperature T in the unit of °C is converted into a numerical value without a unit and converted with coordinates of oxygen atoms without a unit, that is, the formula regarding the coordinates of oxygen atoms in the present invention is merely a quantitative conversion, and does not relate to unit conversion.

In an embodiment, the coordinates of the oxygen atoms in the metal oxide are (x, y, z), and preferably, x = y = z = 0.256 to 0.258, such that the distance between the oxygen atoms and the metal atoms in the metal oxide is closer, which facilitates further improving the cell density, thereby improving the energy density and cycle stability of the cathode. The value of x, y, or z includes, but is not limited to, any value of 0.2555, 0.2591, 0.256, 0.2562, 0.2572, and 0.258, or a range value of any two therebetween.

It should be noted that the described X-ray diffraction (XRD) data relating to the crystal structure are all raw test data of products and are not subjected to any treatment, and all products of which XRD data is treated belong to the scope of protection of the present invention if the raw data thereof belongs to the scope of protection of the claims of the present invention. The metal atom in the metal oxide includes, but is not limited to, at least one of Ni, Fe, Mn, Co, Cu, and Zn. It can be understood that the metal oxide precursor in the present invention may be a binary metal oxide, a ternary metal oxide, or a quaternary metal oxide, which is not limited in the present invention.

The present invention also provides a cathode material prepared from the described metal oxide. Preferably, the cathode material is a cathode material for a sodium ion battery or a cathode material for a lithium ion battery.

It should be noted that, for a method for preparing the cathode material, reference is made to an existing method, and details are not described herein again.

The present invention further provides a cathode sheet and a secondary battery comprising the cathode material, preferably a sodium ion battery. The cathode material comprises a cathode current collector and a cathode material layer disposed on a surface of the cathode current collector. The cathode material layer comprises the cathode material described above.

In an embodiment, the cathode current collector may be a metal foil or a composite current collector, for example, aluminum foil is used as the metal foil; the composite current collector may be formed by forming a metal material on a high molecular material substrate.

It can be understood that the cathode material layer further comprises a binding agent and a conductive agent, wherein the binding agent may be any commercially available binding agent used for a cathode sheet or any binding agent prepared in the prior art, which is not limited in the present invention; and the conductive agent may be any commercially available conductive agent for a sodium ion battery.

Hereinafter, the metal oxide and the use thereof will be further described through the following specific examples. However, a person skilled in the art should understand that the following examples are only used to illustrate the present invention, and should not be considered as limiting the scope of the present invention. If specific conditions are not specified in the examples, the examples are performed according to conventional conditions or conditions recommended by a manufacturer. The reagents or instruments used, if not specified by a manufacturer, are all commercially available conventional products.

### Example 1

A nickel salt, an iron salt, and a manganese salt were prepared into a mixed metal salt solution in a metal atomic molar ratio of 1:1:1. The mixed metal salt solution was first atomized and then pyrolyzed at a pyrolysis rate of 15.06 to obtain a metal oxide. The simplified formula of the obtained metal oxide product was NFM111.

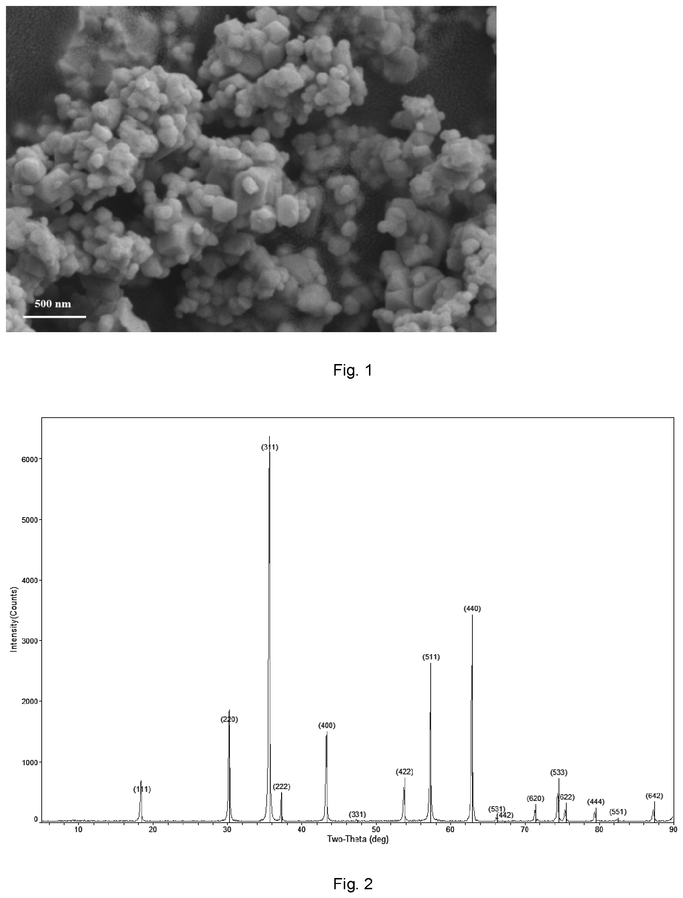

The surface morphology of the metal oxide prepared in this example was shown in Fig. 1. It can be determined that the morphology of the metal oxide particle was an octahedron-like structure, and the particle size of the product was relatively uniform. Upon detection, the X-ray diffraction peak of the metal oxide was as shown in Fig. 2, and relevant test parameters were as shown in table 1, and it can be determined that the metal oxide satisfied: T = 938.26 - 494.18 × 0.957^{^K}, the unit cell density ρ = 4.806 + 9 × 10⁻⁴ T, the (220) crystal plane diffraction angle θ = 30.878 - 0.001 T, the peak intensity ratio n of a (311) crystal plane diffraction peak to a (111) crystal plane diffraction peak = 5 × 10⁻⁶ T²- 0.0032 × T + 2.2835, and oxygen atom coordinates = y = z = 0.264 - 1 10⁻⁵ × T.

### Example 2

A nickel salt and a manganese salt were prepared into a mixed metal salt solution in a metal atomic molar ratio of 35:65. The mixed metal salt solution was first atomized and then pyrolyzed at a pyrolysis rate of 26.4 to obtain a metal oxide. The simplified formula of the obtained metal oxide product was NM3565.

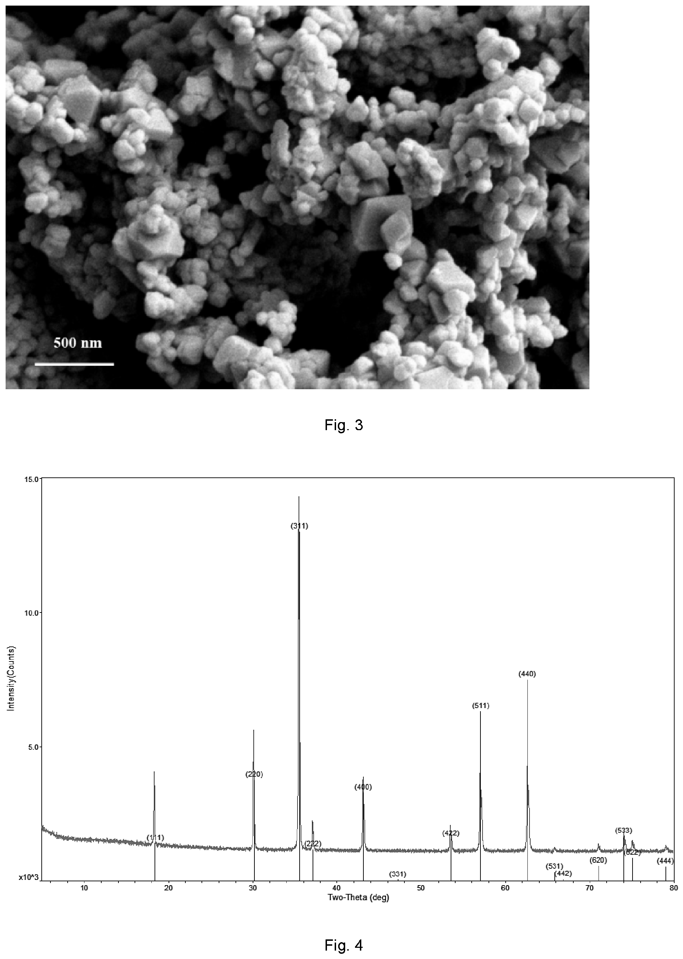

The surface morphology of the metal oxide prepared in this example was shown in Fig. 3. It can be determined that the morphology of the metal oxide particle was an octahedron-like structure, and the particle size of the product was relatively uniform. Upon detection, the X-ray diffraction peak of the metal oxide was as shown in Fig. 4, and relevant test parameters were as shown in table 1, and it can be determined that the metal oxide satisfied: T = 938.26 - 494.18 × 0.957^{^K}, the unit cell density ρ = 4.806 + 9 × 10⁻⁴ T, the (220) crystal plane diffraction angle θ = 30.878 - 0.001 T, the peak intensity ratio n of the (311) crystal plane diffraction peak to the (111) crystal plane diffraction peak n = 5 × 10⁻⁶ T²- 0.0032 × T + 2.2835, and oxygen atom coordinates x = y = z = 0.264 - 1 × 10⁻⁵ × T.

### Example 3

A nickel salt, a copper salt, an iron salt, and a manganese salt were prepared into a mixed metal salt solution in a metal atomic molar ratio of 2:1:3:3. The mixed metal salt solution was first atomized and then pyrolyzed at a pyrolysis rate of 39.86 to obtain a metal oxide. The simplified formula of the obtained metal oxide product was NCFM2133.

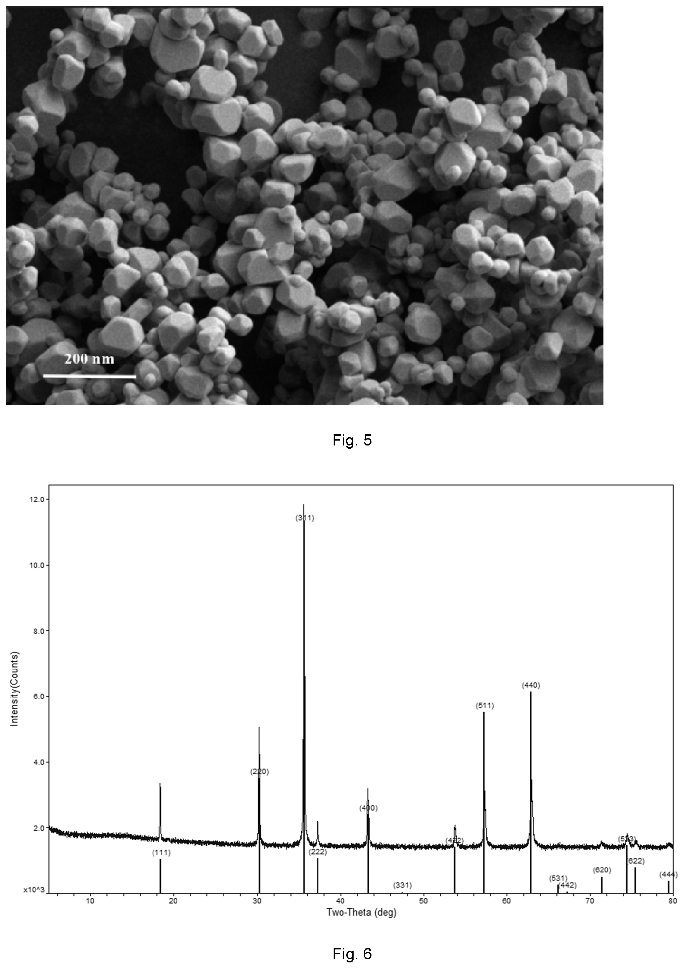

The surface morphology of the metal oxide prepared in this example was shown in Fig. 5. It can be determined that the morphology of the metal oxide particle was an octahedron-like structure, and the particle size of the product was relatively uniform. Upon detection, the X-ray diffraction peak of the metal oxide was as shown in Fig. 6, and relevant test parameters were as shown in table 1, and it can be determined that the metal oxide satisfied: T = 938.26 - 494.18 × 0.957^{^K}, the unit cell density ρ = 4.806 + 9 × 10⁻⁴ T, the (220) crystal plane diffraction angle θ = 30.878 - 0.001 T, the peak intensity ratio n of the (311) crystal plane diffraction peak to the (111) crystal plane diffraction peak n = 5 × 10⁻⁶ T²- 0.0032 × T + 2.2835, and oxygen atom coordinates x = y = z = 0.264 - 1 × 10⁻⁵ × T.

### Example 4

A copper salt, an iron salt, and a manganese salt were prepared into a mixed metal salt solution in a metal atomic molar ratio of 2:2:4. The mixed metal salt solution was first atomized and then pyrolyzed at a pyrolysis rate of 1.83 to obtain a metal oxide. The simplified formula of the obtained metal oxide product was CFM244.

The metal oxide prepared in this example was tested, and results were as shown in table 1. It can be determined that the metal oxide satisfied: T = 938.26 - 494.18 × 0.957^{^K}, the unit cell density ρ = 4.806 + 9 × 10⁻⁴ T, the (220) crystal plane diffraction angle θ = 30.878 - 0.001 T, the peak intensity ratio n of the (311) crystal plane diffraction peak to the (111) crystal plane diffraction peak = 5 × 10⁻⁶ T²- 0.0032 × T + 2.2835, and oxygen atom coordinates = y = z = 0.264 - 1 10⁻⁵ × T.

### Comparative Example 1

A nickel salt, an iron salt, and a manganese salt were prepared into a mixed metal salt solution in a metal atomic molar ratio of 1:1:1. The mixed metal salt solution was first atomized and then pyrolyzed at a pyrolysis rate of 49.8 to obtain a metal oxide. The simplified formula of the obtained metal oxide product was NFM111.

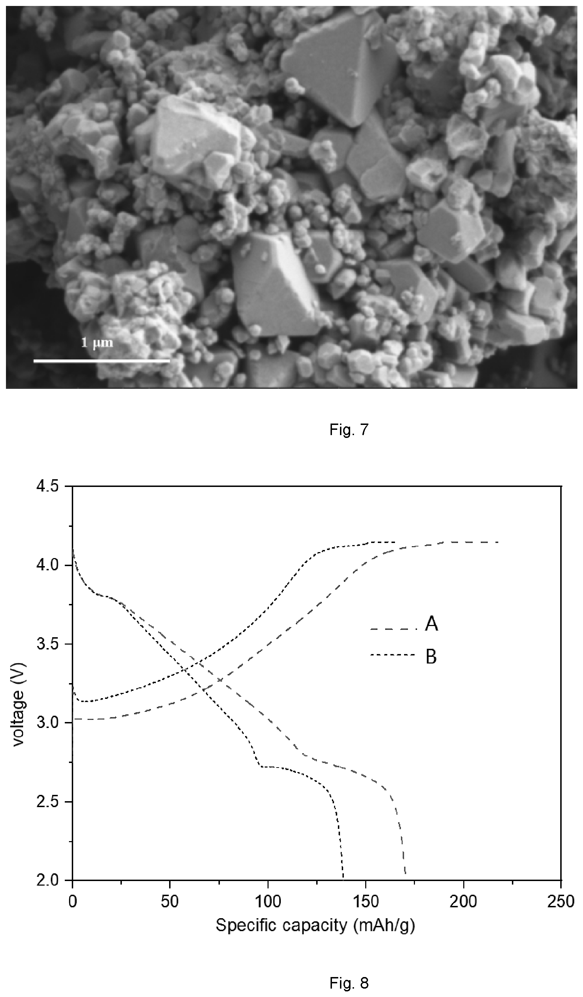

The surface morphology of the metal oxide prepared in this comparative example was shown in Fig. 7. It can be determined that the morphology of the metal oxide particle was an octahedron-like structure, but the agglomeration phenomenon was severe, and the particle size was quite non-uniform. The metal oxide prepared in this comparative example was tested, and the results were shown in Table 1.

### Comparative Example 2

A nickel salt and a manganese salt were prepared into a mixed metal salt solution in a metal atomic molar ratio of 35:65. The mixed metal salt solution was first atomized and then pyrolyzed at a pyrolysis rate of 0.29 to obtain a metal oxide. The simplified formula of the obtained metal oxide product was NM3565. The metal oxide prepared in this comparative example were tested, and the results were shown in Table 1.

### Comparative Example 3

A nickel salt, a copper salt, an iron salt, and a manganese salt were prepared into a mixed metal salt solution in a metal atomic molar ratio of 2:1:3:3. The mixed metal salt solution was first atomized and then pyrolyzed at a pyrolysis rate of 45.2 to obtain a metal oxide. The simplified formula of the obtained metal oxide product was NCFM2133. The metal oxide prepared in this comparative example were tested, and the results were shown in Table 1.

### Comparative Example 4

A copper salt, an iron salt, and a manganese salt were prepared into a mixed metal salt solution in a metal atomic molar ratio of 2:4:4. The mixed metal salt solution was first atomized and then pyrolyzed at a pyrolysis rate of 9.5 to obtain a metal oxide. The simplified formula of the obtained metal oxide product was CFM244. The metal oxide prepared in this comparative example were tested, and the results were shown in Table 1.

**Table 1**

| | Lattice constant a=b=c (Å) | Unit cell density (g/cm³) | (220) diffraction angle θ(°) | Peak intensity ratio n of (311) to (111) | Oxygen atom coordinates x=y=z | Average grain size (Å) | Residual stress (MPa) | Pyrolysis rate K |
|---|---|---|---|---|---|---|---|---|
| Example 1 | 8.354 | 5.421 | 30.195 | 2.432 | 0.2572 | 720.25 | F₁=4.355 | 15.06 |
| Example 2 | 8.341 | 5.511 | 30.095 | 2.845 | 0.2562 | 860.28 | F₂=2.311 | 26.40 |
| Example 3 | 8.324 | 5.573 | 30.025 | 3.189 | 0.2555 | 957.05 | F₂=6.038 | 39.89 |
| Example 4 | 8.337 | 5.240 | 30.396 | 2.015 | 0.2591 | 438.89 | F₁=1.339 | 1.83 |
| Comparative Example 1 | 8.315 | 5.621 | 31.025 | 4.151 | 0.2483 | 1253.0 | F₂=14.50 | 49.80 |
| Comparative Example 2 | 8.280 | 5.064 | 29.807 | 1.754 | 0.2475 | 186.65 | F₁=0.980 | 0.29 |
| Comparative Example 3 | 8.283 | 5.568 | 30.000 | 3.285 | 0.2553 | 978.15 | F₂=7.000 | 45.20 |
| Comparative Example 4 | 8.355 | 5.259 | 30.265 | 2.210 | 0.2585 | 624.50 | F₁=5.890 | 9.50 |

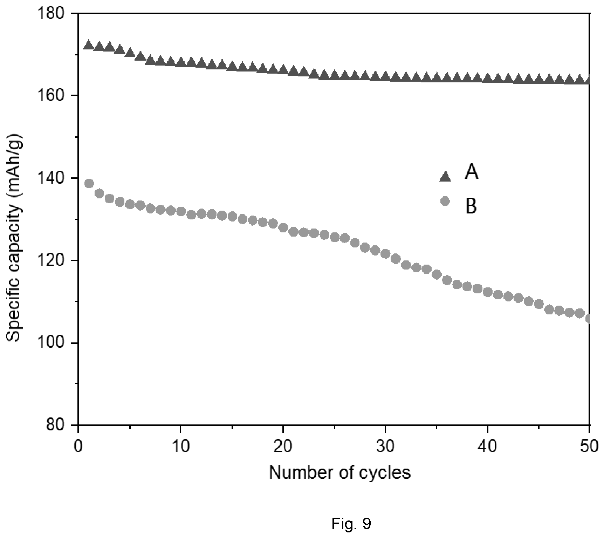

The cathode materials prepared in Examples 1 to 4 and Comparative Examples 1 to 4 were used to make sodium-ion button batteries. The first discharge specific capacity at 0.1C was tested at a voltage of 2 to 4.15V, and the capacity retention rate after 50 cycles was tested at the same voltage conditions. 0.1 g of the cathode material was dissolved in 50 mL of pure water, stirred uniformly, and allowed to stand for 1 h to measure the pH of the supernatant. The closer the pH value is to neutral, the lower the residual alkali content on the surface. The test results were shown in Fig. 8 and 9 and Table 2.

**Table 2**

| | First discharge specific capacity at 0.1C (mAh/g) | Capacity retention rate after 50 cycles (%) | Degree of surface residual alkali (pH) |
|---|---|---|---|
| Example 1 | 170.8 | 95.7 | 7.8 |
| Example 2 | 164.6 | 92.5 | 8.1 |
| Example 3 | 173.2 | 96.8 | 7.4 |
| Example 4 | 160.6 | 91.7 | 8.2 |
| Comparative Example 1 | 138.5 | 78.5 | 9.4 |
| Comparative Example 2 | 129.4 | 72.9 | 10.3 |
| Comparative Example 3 | 158.2 | 90.1 | 8.5 |
| Comparative Example 4 | 152.9 | 85.9 | 9.0 |

According to Fig. 8 and 9 and Table 2, it can be determined that the metal oxides prepared in Examples 1 to 4 were used as a cathode material for a sodium ion battery, and had a relatively high first discharge specific capacity at a voltage of 2 to 4.15 V, and had a capacity retention rate of up to 90% or more after 50 cycles of a cycle test, showing excellent cycle stability. However, when the metal oxides prepared in Comparative Example 1 to Comparative Example 4 were used as a cathode material for a sodium ion battery, they had a low specific capacity and low stability.

Various technical features of the described examples can be combined in any way, and in order to make the description brief, not all possible combinations of the technical features in the described examples are described. However, as long as the combinations of these technical features are not contradictory, all of the technical features should be considered to fall within the scope of the description.

The described examples merely represent several embodiments of the present invention, and the description thereof is relatively specific and detailed, but cannot be understood as a limitation to the patent scope of the invention. It should be noted that, for a person skilled in the art, various modifications and improvements can be made without departing from the concept of the present invention, and all these modifications and improvements belong to the scope of protection of the present invention. Therefore, the scope of protection of the present invention should be subject to the appended claims.

## Claims

1. A metal oxide, wherein the metal oxide is a face-centered cubic structure, the space group is Fd-3m, the lattice constant a of the metal oxide is 8.32Â to 8.37Å, and in the metal oxide, the tensile residual stress F₁ is 0.105 MPa to 5.51 MPa, or the compressive residual stress F₂ is 1.05 MPa to 8.6 MPa; and
the metal oxide is prepared by spray pyrolysis with a pyrolysis rate K ranging from 0.361 to 48.611.

2. The metal oxide according to claim 1, wherein the pyrolysis temperature T = 938.26 - 494.18 × 0.957^{^K}.

3. The metal oxide according to claim 2, wherein the unit cell density of the metal oxide ρ = 4.806 + 9 × 10⁻⁴ × T.

4. The metal oxide according to claim 3, wherein the unit cell density ρ of the metal oxide is 5.22 g/cm³ to 5.58 g/cm³.

5. The metal oxide according to claim 2, wherein the (220) crystal plane diffraction angle in the metal oxide is θ = 30.878 - 0.001T.

6. The metal oxide according to claim 5, wherein the (220) crystal plane diffraction angle θ of the metal oxide is 30.10° to 30.42°.

7. The metal oxide according to claim 2, wherein the peak intensity ratio of a (311) crystal plane diffraction peak to a (111) crystal plane diffraction peak in the metal oxide is n = 5 × 10⁻⁶ T² - 0.0032 × T + 2.2835.

8. The metal oxide according to claim 7, wherein the peak intensity ratio n of the (311) crystal plane diffraction peak to the (111) crystal plane diffraction peak in the metal oxide is 1.86 to 3.33.

9. The metal oxide according to claim 2, wherein the coordinates of oxygen atoms in the metal oxide are (x, y, z), wherein x = y = z = 0.264 - 1 10⁻⁵ × T.

10. The metal oxide according to claim 9, wherein the coordinates of oxygen atoms in the metal oxide are (x, y, z), wherein x = y = z = 0.2555 to 0.2591.

11. The metal oxide according to claim 1 or 2, wherein the grain size of the metal oxide is 300 Å to 1000 Å.

12. The metal oxide according to claim 1 or 2, wherein the pyrolysis time is 1 min to 20 min; and/or the pyrolysis temperature T is 452°C to 879°C.

13. A cathode material made from the metal oxide precursor according to any one of claims 1 to 12.

14. A cathode sheet, comprising a cathode current collector and a cathode material layer disposed on a surface of the cathode current collector, wherein the cathode material layer comprises the cathode material according to claim 13.

15. A secondary battery comprising the cathode sheet of claim 14.
